# EUROPEAN PATENT APPLICATION

(11) **EP 4 459 763 A1**
(43) Date of publication of application: **06.11.2024**
(21) Application number: 23820002.6
(22) Date of filing: 11.05.2023
(51) Int. Cl.: H01M 50/242, H01M 50/502, H01M 50/578, H01M 50/211, H01M 50/183, H01M 50/105, H01M 50/143

(54) **BUSBAR FRAME ASSEMBLY AND BATTERY MODULE COMPRISING SAME**

(30) Priority: 09.06.2022 KR 20220070387; 11.04.2023 KR 20230047728
(71) Applicant: LG Energy Solution, Ltd., Seoul 07335 (KR)
(72) Inventor: LEE, Hyun Jae, Daejeon 34122 (KR); CHOI, Yong Joon, Daejeon 34122 (KR); SIN, Je Hwan, Daejeon 34122 (KR)
(74) Representative: Plasseraud IP
(86) International application number: PCT/KR2023/006437
(87) International publication number: WO 2023/239066

(57) **Abstract**

A bus bar frame assembly according to an embodiment of the present invention includes a bus bar frame which is configured to cover one side of each of a plurality of batteries and on which a bus bar configured to electrically connect the plurality of batteries to the outside is mounted, and a buffer member protruding from an inner surface of the bus bar frame toward the plurality of batteries, wherein the buffer member includes a distal end disposed closest to the plurality of batteries in a protruding direction of the buffer member, and support surfaces, each of which has an obtuse angle with respect to the distal end to face each of the batteries adjacent to the buffer member.

## Description

### TECHNICAL FIELD

### CROSS-REFERENCE TO RELATED APPLICATION

The present application claims the benefit of the priority of Korean Patent Application Nos. 10-2022-0070387 filed on June 09, 2022 and 10-2023-0047728 filed on April 11, 2023, which are hereby incorporated by reference in their entirety.

### TECHNICAL FIELD

The present invention relates to a bus bar frame assembly and a battery module including the same.

### BACKGROUND ART

In order to solve the problem of environmental pollution and solve demands for alternative energy sources due to the depletion of petroleum resources, research and development on power generation based on Eco-friendly energy sources are being conducted. Particularly, researches on secondary batteries capable of being repeatedly chargeable/dischargeable are being actively conducted, and research/development on various aspects such as materials, structures, processes, and stability of secondary batteries are being conducted.

Secondary batteries may be embedded in a battery module. Specifically, the secondary batteries are embedded in the battery module, and the secondary batteries inside the battery module may be electrically connected to the outside through a bus bar. The bus bar may be mounted on a bus bar frame to maintain structural stability.

According to the related art, when charging and discharging are repeated, and a gas is generated inside the secondary batteries, a pressure may increase intensively at edges of the secondary batteries. Thus, a structural design capable of dispersing the pressure concentrated at the edges has been required.

### DISCLOSURE OF THE INVENTION

### TECHNICAL PROBLEM

An object of the present for solving the above problem is to provide a bus bar frame assembly capable of effectively dispersing a pressure when a gas is generated inside a secondary battery so that a pressure is concentrated at an edge portion, and a battery module including the same.

### TECHNICAL SOLUTION

A bus bar frame assembly according to an embodiment of the present invention includes a bus bar frame which is configured to cover one side of each of a plurality of batteries and on which a bus bar configured to electrically connect the plurality of batteries to the outside is mounted, and a buffer member protruding from an inner surface of the bus bar frame toward the plurality of batteries, wherein the buffer member includes a distal end disposed closest to the plurality of batteries in a protruding direction of the buffer member, and support surfaces, each of which has an obtuse angle with respect to the distal end to face each of the batteries adjacent to the buffer member.

A battery module according to an embodiment of the present invention includes a plurality of batteries, a bus bar frame which is configured to cover one side of each of the plurality of batteries and on which a bus bar configured to electrically connect the plurality of batteries to the outside is mounted, and a buffer member protruding from an inner surface of the bus bar frame toward the plurality of batteries, wherein the buffer member includes a distal end disposed closest to the plurality of batteries in a protruding direction of the buffer member, and support surfaces, each of which has an obtuse angle with respect to the distal end to face each of the batteries adjacent to the buffer member.

### ADVANTAGEOUS EFFECTS

According to the preferred embodiment of the present invention, the damage due to the swelling of the secondary battery may be suppressed.

According to the preferred embodiment of the present invention, the secondary battery and the battery module may be prevented from being structurally damaged to improve structure stability.

### BRIEF DESCRIPTION OF THE DRAWINGS

FIG. 1 is a front view of a secondary battery according to an embodiment of the present invention.
FIG. 2 is a perspective view of a battery module according to an embodiment of the present invention.
FIG. 3 is an exploded perspective view of the battery module according to an embodiment of the present invention.
FIG. 4 is an exploded perspective view of a bus bar frame assembly according to an embodiment of the present invention.
FIG. 5 is a side view of the bus bar frame assembly according to an embodiment of the present invention.
FIG. 6 is a plan view illustrating a configuration of a buffer member when viewed from the top according to an embodiment of the present invention.
FIG. 7 is a plan view illustrating an arrangement of buffer members according to an embodiment of the present invention.
FIG. 8 is a plan view illustrating contact of the secondary battery according to an embodiment of the present invention.
FIG. 9 is a partial perspective view of a contact area according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

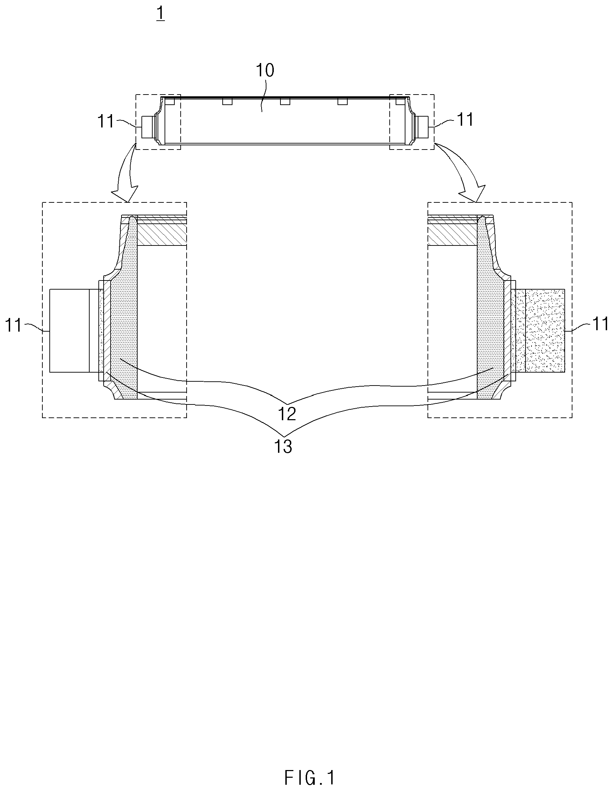

FIG. 1 is a front view of a secondary battery according to an embodiment of the present invention.

A secondary battery 1 may include an electrode assembly therein. The electrode assembly may have a shape in which positive and negative electrodes are alternately stacked with a separator therebetween.

The secondary battery 1 may include a case 10. The case 10 may accommodate the electrode assembly while surrounding the electrode assembly. The case 10 may be a pouch-type case.

The case 10 may include a terrace part 12. The terrace part 12 may be a predetermined area including an edge of the case 10. For example, the terrace part 12 may be a portion from the edge of the electrode assembly to the edge of the case 10 when viewed from the front.

The terrace part 12 may include a sealing part 13 at a distal end thereof. The sealing part 13 may be an edge portion of the case 10.

The secondary battery 1 may include an electrode lead 11. The electrode lead 11 may electrically connect the electrode assembly to the outside. The electrode lead 11 may be connected to the electrode assembly inside the case 10 and may protrude out of the case 10 for electrical connection with the outside.

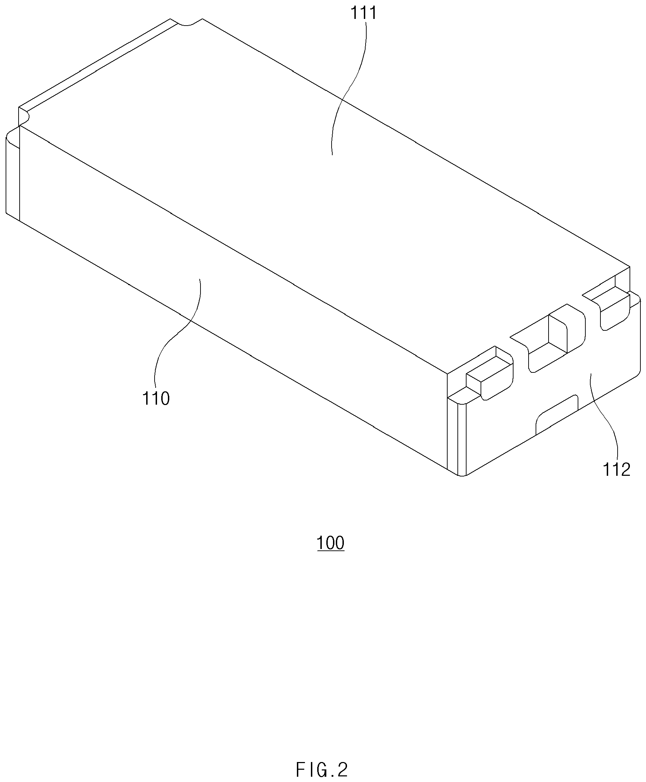

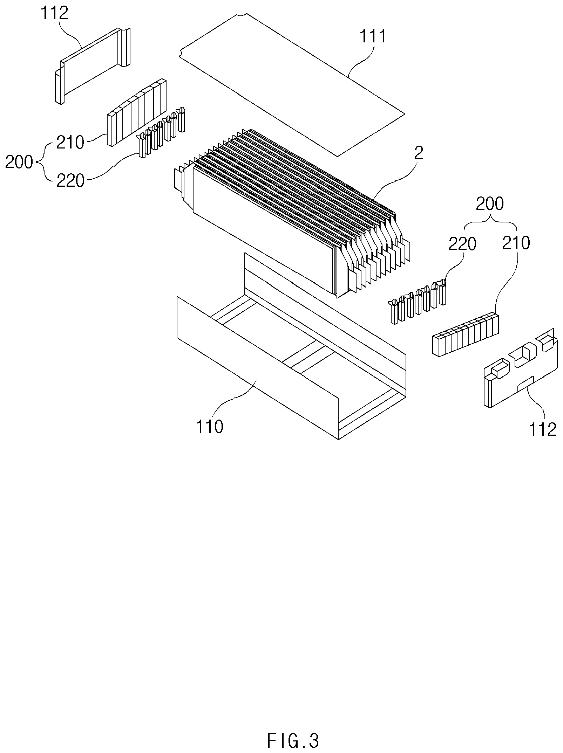

FIG. 2 is a perspective view of the battery module according to an embodiment of the present invention, and FIG. 3 is an exploded perspective view of the battery module according to an embodiment of the present invention. The description of the foregoing embodiment may be equally or similarly applied to this embodiment.

The battery module 100 may include a plurality of batteries 2. Each of the plurality of batteries 2 may be a secondary battery.

The battery module 100 may include plates. The outside of the battery module 100 may be provided as the plates. For example, the periphery of the battery module 100 may be defined by a lower plate 110, an upper plate 111, and an end plate 112.

The lower plate 110, the upper plate 111, and the end plate 112 may be disposed in a shape surrounding the plurality of batteries 2. Referring to FIGS. 2 and 3, the lower plate 110 may be provided as a U-shaped plate. The upper plate 111 may be mounted on the lower plate 110 as a flat plate, and sides of the electrode leads 11 of the plurality of batteries 2 may be covered by the end plate 112. However, this is one example and is not particularly limited.

A battery module 100 may include a bus bar frame 210. The bus bar frame 210 may be disposed between the plurality of batteries 2 and the end plate 112.

The battery module 100 may include a buffer member 220. The buffer member 220 may be disposed between the plurality of batteries 2 and the bus bar frame 210. The buffer member 220 may disperse a pressure when one of the plurality of batteries 2 is swelled.

The bus bar frame 210 and the end plate 112 may constitute a bus bar frame assembly 200.

The battery module 100 may include a plurality of bus bar frame assemblies 200. The plurality of bus bar frame assemblies 200 are provided in the battery module 100 to cover both sides of the plurality of batteries 2. Specifically, the bus bar frame assemblies 200 may cover sides of the electrode leads 11 of the plurality of batteries 2.

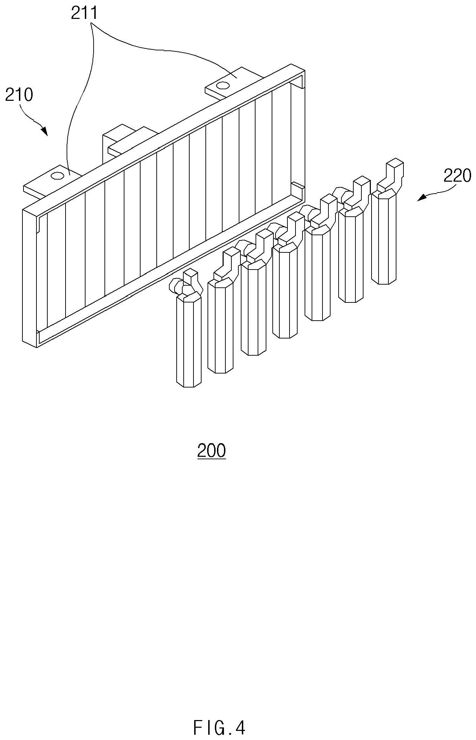

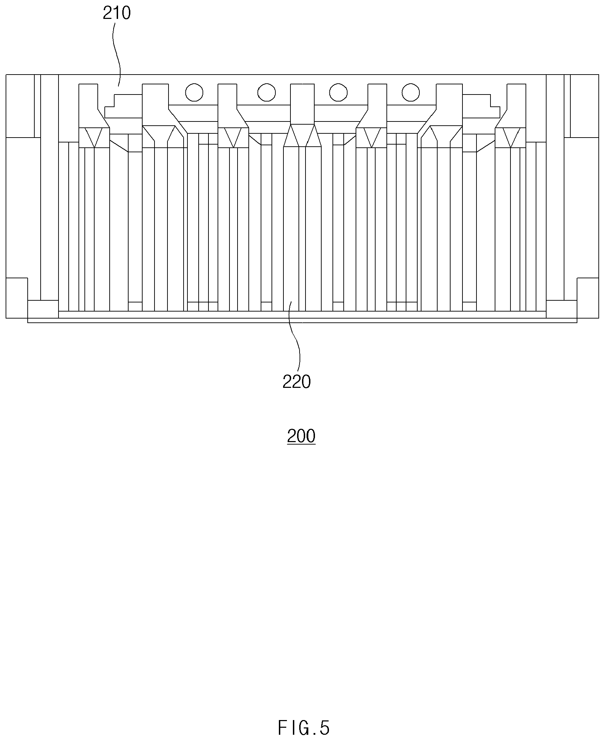

FIG. 4 is an exploded perspective view of the bus bar frame assembly according to an embodiment of the present invention, and FIG. 5 is a side view of the bus bar frame assembly according to an embodiment of the present invention. The description of the foregoing embodiment may be equally or similarly applied to this embodiment.

A bus bar 211 may be mounted on the bus bar frame 210. In addition, although not shown, a connector may be mounted. The bus bar 211 or connector may be mounted on the bus bar frame 210 and electrically connected to the plurality of batteries 2.

The buffer member 220 may extend in a predetermined direction. For example, the buffer member 220 may extend in a direction perpendicular to a stacking direction of the plurality of batteries 2. In other words, the buffer member 220 may extend along the sealing part 13 disposed at one edge of each of the plurality of batteries 2. An extending length of the buffer member 220 may correspond to a length of a sealing part 130, but is not limited thereto.

The bus bar frame 210 and the buffer member 220 may be integrated with each other.

The battery module 100 (or the bus bar frame assembly 200) may include a plurality of buffer members 220. The plurality of buffer members 220 may be arranged in a direction parallel to the direction in which the plurality of batteries 2 are stacked.

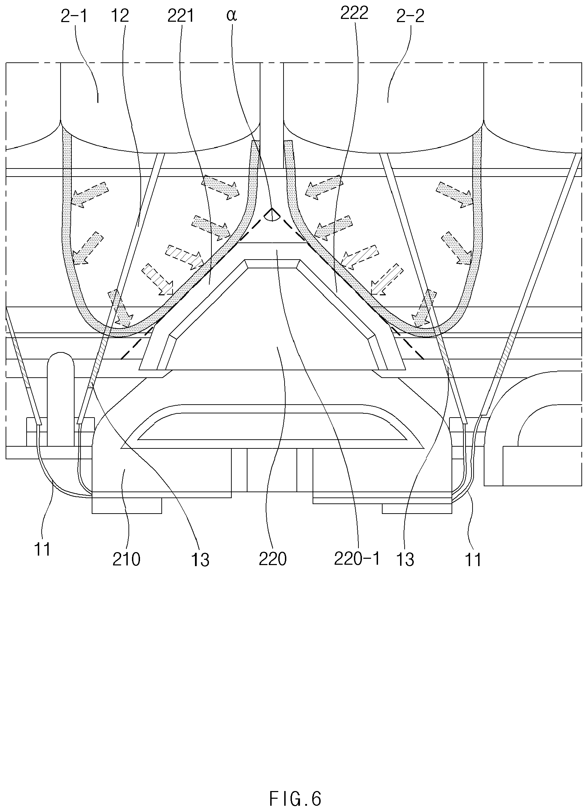

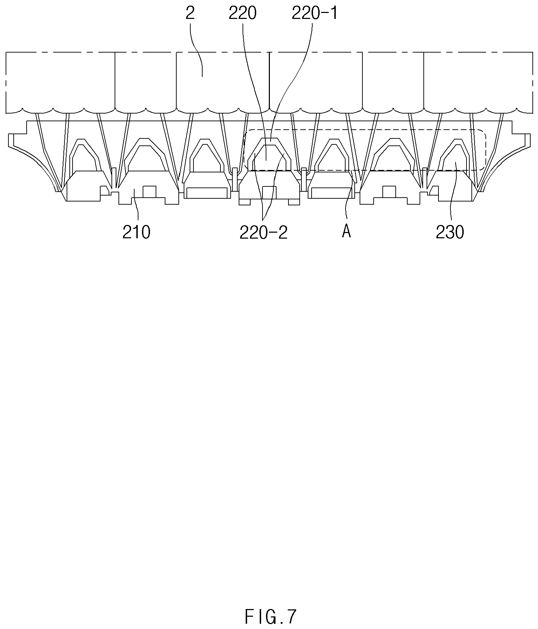

FIG. 6 is a plan view illustrating a configuration of the buffer member when viewed from the top according to an embodiment of the present invention, and FIG. 7 is a plan view illustrating an arrangement of the buffer members according to an embodiment of the present invention. The description of the foregoing embodiment may be equally or similarly applied to this embodiment.

The battery module 100 may include the bus bar frame 210 which covers at least one side of the plurality of batteries 2 and on which the bus bar 211 electrically connecting the plurality of batteries 2 to the outside is mounted.

The buffer member 220 may protrude toward the plurality of batteries 2 from an inner surface of the bus bar frame 210.

The buffer member 220 may include a distal end 220-1. The distal end 220-1 may be disposed closest to the plurality of batteries 2 with respect to the protruding direction of the buffer member 220.

The buffer member 220 may include support surfaces 220-2. The support surfaces 220-2 may include a first support surface 221 and a second support surface 222. The support surfaces 220-2 may have an obtuse angle with respect to the distal end 220-1 so as to face each of the plurality of batteries 2 adjacent to the buffer member 220. Referring to FIG. 6, the first support surface 221 and the second support surface 222 may have an obtuse angle α therebetween.

When each of the support surfaces 220-2 has the obtuse angle, the support surfaces 220-2 may provide surfaces facing the plurality of batteries 2, and thus, pressure dispersion due to the supporting of the support surfaces when the batteries are swelled may be effectively achieved.

Each of the support surfaces 220-2 may be a flat surface. In other words, each of the first support surface 221 and the second support surface 222 may be a flat surface. However, the present invention is not limited thereto.

When one of the plurality of batteries 2 is expanded, a direction in which the one battery presses one of the support surfaces 220-2 may cross a width direction of the one support surface.

For example, when one battery (e.g., first battery 2-1) adjacent to the first support surface 221 among the plurality of batteries 2 is expanded, a direction in which one battery (e.g., first battery 2-1) presses the first support surface 221 may cross the width direction of the first support surface 221.

For another example, when the other battery (e.g., second battery 2-2) adjacent to the second support surface 222 among the plurality of batteries 2 is expanded, a direction in which the other battery (e.g., second battery 2-2) presses the second support surface 222 may cross the width direction of the second support surface 222.

As described above, since the width direction of the support surfaces crosses the pressing direction of the batteries, the pressure dispersion when the batteries are swelled may be effectively achieved.

The support surfaces 220-2 may cover 50% or more of an outer surface of the buffer member 220. In other words, the support surfaces 220-2 may occupy the largest area on the outer surfaces of the buffer member 220. As an area of the support surfaces 220-2 is wide, a pressure concentrated at the edge (e.g., the terrace part 12) during the swelling of the plurality of batteries 2 may be effectively dispersed.

The buffer member 220 may be provided in plurality. For example, the plurality of buffer members 220 may be disposed in the stacking direction of the plurality of batteries 2.

In the plurality of buffer members, an asymmetric buffer member 230 may be provided. For example, when two of the adjacent batteries may be defined as a first battery and a second battery, and also, a surface of the support surfaces, which faces the first battery, is defined as the first support surface, and a surface of the support surfaces, which faces the second battery, is defined as the second support surface, the asymmetric buffer member 230 may have the first support surface and the second support surface, which have areas different from each other.

A section A in which an angle between the support surfaces varies may be defined in the arrangement direction of the plurality of buffer members. For example, the plurality of buffer members 220 may be disposed in the stacking direction of the plurality of batteries 2, and the section A in which the angle between the support surfaces 220-2 varies in the arrangement direction may be defined.

Specifically, for example, when two of the adjacent batteries may be defined as the first battery and the second battery, and also, a surface of the support surfaces 220-2, which faces the first support surface, is defined as the first support surface, and a surface of the support surfaces 220-2, which faces the second battery, is defined as the second support surface, a difference in area between the first support surface and the second support surface may increase toward the battery, which is stacked at the outermost side, of the plurality of batteries 2.

As described above, when the section A in which the angle between the support surfaces 220-2 varies in the arrangement direction is defined, or areas of the support surfaces 220-2 are different from each other, an effect of the pressure dispersion may be adaptively maintained according to structural characteristics of the bus bar frame 210 and the plurality of batteries 2.

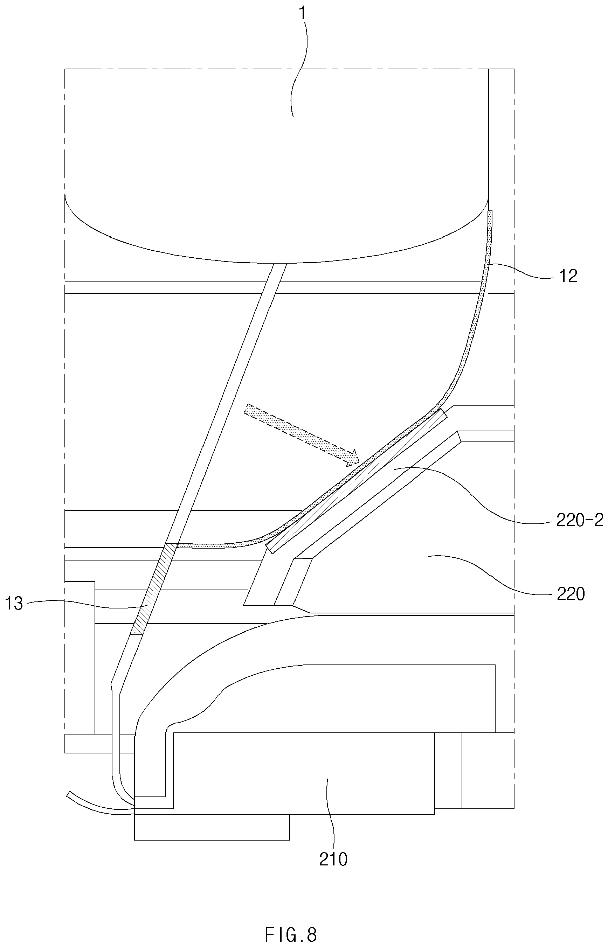

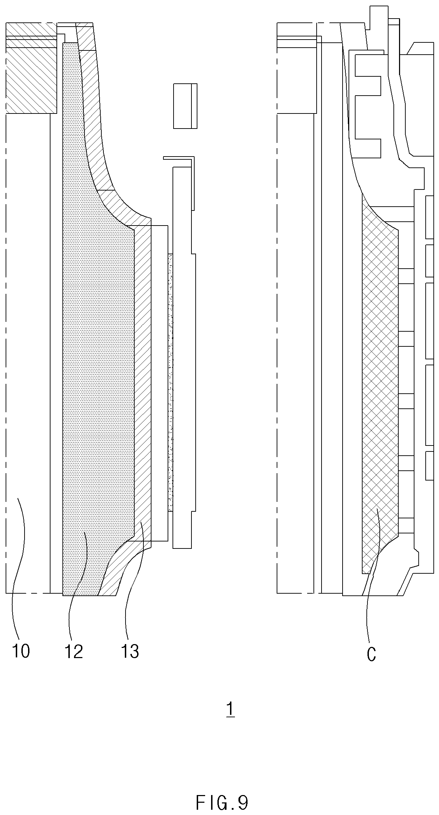

FIG. 8 is a plan view illustrating contact of the secondary battery according to an embodiment of the present invention, and FIG. 9 is a partial perspective view of a contact area according to an embodiment of the present invention. The description of the foregoing embodiment may be equally or similarly applied to this embodiment.

As described above, each of the plurality of batteries 2 may include a terrace part 12 provided with a sealing part 13 disposed on a distal end thereof.

The buffer member 220 may be in contact with a predetermined area range of the terrace part 12. For example, an area that is in contact with the buffer member 220 on the area of the terrace part 12 excluding the sealing part 13 may be within a range of 25% to 55%.

When the secondary battery 1 is swelled, the support surfaces 220-2 of the buffer member 220 may be in contact with the terrace part 12 within a range of 25% to 55% of the area of the terrace part 12 excluding the sealing part 13 to support the terrace part 12, thereby effectively disperse the pressure concentrated at the edge of the secondary battery 1.

According to the above-described embodiments, the pressure concentrated at the edge of the secondary battery 1 may be dispersed through the support surfaces of the buffer member, and thus, the secondary battery 1 or the bus bar frame 210 may be prevented from being damaged to improve the structural stability.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Secondary battery
2: Plurality of batteries
2-1: First battery
2-2: Second battery
10: Case
11: Electrode lead
12: Terrace part
13: Sealing part
100: Battery module
110: Lower plate
111: Upper plate
112: End plate
200: Bus bar frame assembly
210: Bus bar frame
211: Bus bar
220: Buffer member
220-1: Distal end
220-2: Support surfaces
221: First support surface
222: Second support surface
230: Asymmetric buffer member

## Claims

1. A bus bar frame assembly comprising:
a bus bar frame which is configured to cover one side of each of a plurality of batteries and on which a bus bar configured to electrically connect the plurality of batteries to the outside is mounted; and
a buffer member protruding from an inner surface of the bus bar frame toward the plurality of batteries,
wherein the buffer member comprises:
a distal end disposed closest to the plurality of batteries in a protruding direction of the buffer member; and
support surfaces, each of which has an obtuse angle with respect to the distal end to face each of the batteries adjacent to the buffer member.

2. The bus bar frame assembly of claim 1, wherein, when one of the plurality of batteries is expanded, a direction in which the one battery presses one support surface of the support surfaces, crosses a width direction of the one support surface.

3. The bus bar frame assembly of claim 1, wherein the buffer member is provided in plurality, which are disposed in a stacking direction of the plurality of batteries, and
a section in which an angle between the support surfaces varies is defined in an arrangement direction of the plurality of buffer members.

4. The bus bar frame assembly of claim 1, wherein the buffer member extends in a direction perpendicular to a stacking direction of the plurality of batteries.

5. The bus bar frame assembly of claim 1, wherein the support surfaces corresponds to 50% or more of an outer surface of the buffer member.

6. The bus bar frame assembly of claim 1, wherein the bus bar frame and the buffer member are integrated with each other.

7. The bus bar frame assembly of claim 1, wherein the buffer member extends along a sealing part disposed on an edge of one side of each of the plurality of batteries.

8. The bus bar frame assembly of claim 7, wherein an extending length of the buffer member corresponds to a length of the sealing part.

9. The bus bar frame assembly of claim 1, wherein, when two batteries of the adjacent batteries are defined as a first battery and a second battery, a surface of the support surfaces, which faces the first battery, is defined as a first support surface, and a surface of the support surfaces, which faces the second battery, is defined as a second support surface, the bus bar frame assembly further comprises a asymmetric buffer member having the first support surface and the second support surface, which have areas different from each other.

10. The bus bar frame assembly of claim 1, wherein each of the support surfaces is a flat surface.

11. The bus bar frame assembly of claim 1, wherein, the buffer member are arranged in a plurality along the stacking direction of the plurality of batteries, when two batteries of the adjacent batteries are defined as a first battery and a second battery, a surface of the support surfaces, which faces the first battery, is defined as a first support surface, and a surface of the support surfaces, which faces the second battery, is defined as a second support surface, a difference in area between the first support surface and the second support surface increases toward the battery, which is stacked at the outermost side, of the plurality of batteries.

12. A battery module comprising:
a plurality of batteries;
a bus bar frame which is configured to cover one side of each of the plurality of batteries and on which a bus bar configured to electrically connect the plurality of batteries to the outside is mounted; and
a buffer member protruding from an inner surface of the bus bar frame toward the plurality of batteries,
wherein the buffer member comprises:
a distal end disposed closest to the plurality of batteries in a protruding direction of the buffer member; and
support surfaces, each of which has an obtuse angle with respect to the distal end to face each of the batteries adjacent to the buffer member.

13. The battery module of claim 12, wherein the bus bar frame and the buffer member form a bus bar frame assembly,
wherein the bus bar frame assembly is provided in plurality to cover both sides of the plurality of batteries.

14. The battery module of claim 12, wherein each of the plurality of batteries comprises a terrace part provided with a sealing part disposed on a distal end thereof, and
an area that is in contact with the buffer member on an area of the terrace part excluding the sealing part is within a range of 25% to 55%.
